Europäisches Patentamt

European Patent Office

Office européen des brevets

(19)

(11) Publication number: **0 307 517**
**A1**

## (12) EUROPEAN PATENT APPLICATION

(21) Application number: **87201788.4**

(22) Date of filing: **18.09.87**

(51) Int. Cl.⁴: **F03D 9/00** , **F03D 11/00**

(43) Date of publication of application:
**22.03.89 Bulletin 89/12**

(84) Designated Contracting States:
**AT BE CH DE ES FR GB GR IT LI LU NL SE**

(71) Applicant: **Doleh, Zakaria Kalil**
**P.O. Box 1566**
**Dubai(AE)**

(72) Inventor: **Doleh, Zakaria Kalil**
**P.O. Box 1566**
**Dubai(AE)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **System for generating electrical energy.**

(57) A closed circuit electric power generating system supplied by windenergy and/or solar energy. The generating system is integrated in a building, being the consumer site of the generated electric power.

EP 0 307 517 A1

## SYSTEM FOR GENERATING ELECTRICAL ENERGY

Electrical energy is usually generated with the help of generators, which are driven either by internal combusting engines or steam turbines. As basic energy mostly coal, oil or natural gas is used.

Also hydro-electric power stations, solar energy power stations and power stations making use of the natural wave energy in the oceans are known. All these energy generating systems have the disadvantage that they generate large amounts of energy on a central place which is then to be transmitted by means of power transmission lines to the consumer place. During the transport a large amount of energy is being lost whereas further more the power transmisson line has environmental objections in the landscape.

The invention has as object to eliminate these disadvantages and to provide an energy generating system which can be integrated in the place where the energy is consumed. This is according to the invention achieved with the help of a system for generating electrical energy comprising:
- a first reservoir for water situated above earth's surface,
- a turbine drivingly connected to a generator connected to the outlet of said first reservoir,
- a second reservoir for water connected to the outlet of said turbine,
- a pumping system drivingly connected to a source of compressed air for pumping up the water out of said second reservoir to said first reservoir, and
- a compressor for compressed air drivingly connected to the pump system and driven by windenergy.

This system makes it possible to apply windenergy in a favourable way and to integrate the system for generating electrical energy in a structure in which the energy is consumed, such as a residential building, shopping-centre and so on.

The compressor can be connected to a device for compressing air by means of solar energy. In areas having a large amount of sunshine, this energy source can advantageously be used for converting into electrical energy.

The pumping system consists preferably of a number of pumps each comprising a cilindrical pipe that is placed into the second reservoir, and further provided with a inflatable bellow inside the cilindrical pipe, a movable container connected to the upperside of the bellow and guided in the cilinder, which is guided such that upon reaching the uppermost position is rotated over an angle of around 90°.

After reaching the uppermost position the bellow can be evacuated and moved down due to the weight of the container, whereby the air which is moved outwardly is applied to the air compressor.

The container in the cilinder can be guided by means of balls. Preferably the first reservoir has the shape of a building, which building can be a part of a shopping-centre. Along the wall of the building solar collectors are applied and said solar collectors contain conduits for compressed air. Due to the expansion by the heat in the solar collectors the air is pressurized so that the solar energy is used in a advantageous way.

The wind energy can be used by situating on top of the building wind turbines being drivingly connected to the compressors. A part of the first reservoir can be used as swimming pool whereas another part can be used for surfing, sailing etcetera.

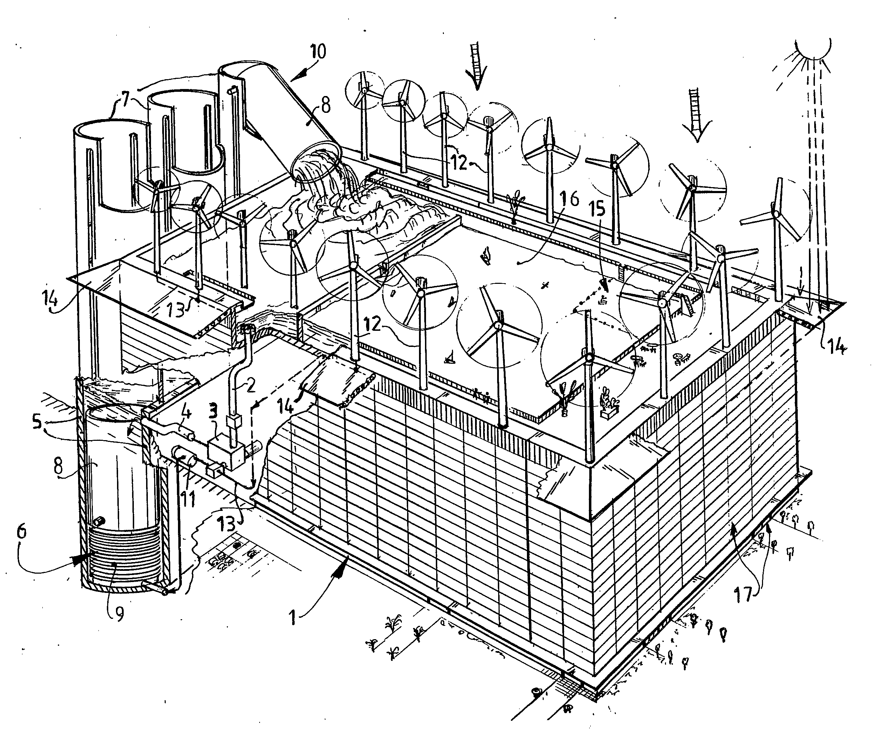

The invention is elucidated with the help of the drawing.

The drawing shows:
a isometric view of the system according to the invention.

The building 1 serves as first reservoir being filled with water. To the outlet of the reservoir an outlet pipe 2 is connected driving a generator 3 for generating electrical energy. The water is supplied from the outlet of the generator 3 through a pipe 4 to a second reservoir 5. In the reservoir 5 a number of identical pumping systems 6 are provided each consisting of a cilindrical outer wall 7, in which a container 8 is vertically movable. The container 8 is moved inwardly of the cilinder 7 with the help of a inflatable bellow 9. The bellow 9 can move the container 8 to an uppermost position 10 in which the container 8 is rotating over at least 90° during which the water in the container is poured out in the reservoir 1. The bellow 9 is inflated with the help of compressed air from the vessel 11. The air is being compressed by means of wind turbines 12 positioned on the roof of the building 1. Each wind turbine 12 is connected to the vessel 11 by means of a conduit 13. These conduits are positioned in solar collectors 14 at the side wall of the building. During the transport through the solar collectors the air is expanded under influence of the solar heat and therefore pressurized. Part of the reservoir 1 can serve as swimming pool 15 whereas another part 16 can be used by windsurfers and sailing boats. Into the building 1 shops 17 of a shopping-centre can be integrated.

The system according to the invention represents a fully integrated public building, that is integrated with means for generating the necessary electrical energy being obtained by means of windenergy or solar energy. The system is very attractive and unattractive looking power transmission lines for the transmission of the electrical energy from a remote power station can be dispensed of.

## Claims

1. System for generating electrical energy comprising:

   - a first reservoir for water situated above earth's surface,
   - a turbine drivingly connected to a generator connected to the outlet of said first reservoir,
   - a second reservoir for water connected to the outlet of said turbine,
   - a pumping system drivingly connected to a source of compressed air for pumping up the water out of said second reservoir to said first reservoir, and
   - a compressor for compressed air drivingly connected to the pump system and driven by windenergy.

2. System according to claim 1, characterized in that further a device for compressing air by means of solar energy is connected to the compressor.

3. System according to claims 1-2, characterized in that the pumping system consists of a number of pumps each comprising a cilindrical pipe which is placed into the second reservoir, and further provided with an inflatable bellow inside the cilindrical pipe, a movable container connected to the upperside of the bellow and guided in the cilinder, which is guided such that upon reaching the uppermost position is rotated over an angle of around 90°.

4. System according to claim 3, characterized in that the bellow is evacuated and moved down due to the weight of the container after reaching the uppermost position, whereby the air which is moved outwardly is applied to the air compressor.

5. System according to claim 3, characterized in that the container in the cilinder is guided by means of balls.

6. System according to claims 1-5, characterized in that the first reservoir has the shape of a building, which building can be a part of a shopping-centre.

7. System according to claims 2 and 6, characterized in that along the wall of the building solar collectors are applied and said solar collectors contain conduits for compressed air.

8. System according to claims 1 and 6, characterized in that by situating on top of the building wind turbines being drivingly connected to the compressors.

9. System according to claims 1-8, characterized in that, the first reservoir can be used as swimming pool.

10. System according to claims 1-10, characterized in that, a part of the reservoir can be used for surfing, sailing etcetera.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-A-2 738 435  (SCHWENTEIT) <br> * Claims * <br> --- | 1,2 | F 03 D   9/00 <br> F 03 D   11/00 |
| A | PATENT ABSTRACTS OF JAPAN, vol. 7, no. 240 (M-251)[1385], 25th October 1983; & JP-A-58 126 476 (TADAO YAMASHITA) 27-07-1983 <br> ----- | 1 | |

TECHNICAL FIELDS SEARCHED (Int. Cl.4)

F 03 D

The present search report has been drawn up for all claims

| Place of search | Date of completion of the search | Examiner |
|---|---|---|
| THE HAGUE | 07-06-1988 | DE WINTER P.E.F. |